# EUROPÄISCHE PATENTSCHRIFT

(11) **EP 3 647 209 B1**
(45) Veröffentlichungstag und Bekanntmachung des Hinweises auf die Patenterteilung: **25.01.2023**
(21) Anmeldenummer: 18203969.3
(22) Anmeldetag: 01.11.2018
(51) Int. Cl.: B64G 1/64, B64G 1/10, B25J 15/08

(54) **EINFANGVORRICHTUNG UND EINFANGVERFAHREN ZUM EINFANGEN VON UNKOOPERATIVEN SATELLITEN IM WELTRAUM**
CAPTURE DEVICE AND CAPTURE METHOD FOR CATCHING UNCOOPERATIVE SATELLITES IN SPACE
DISPOSITIF DE CAPTURE ET PROCÉDÉ DE CAPTURE DESTINÉS À CAPTURER LES SATELLITES NON-OPÉRATOIRES DANS L'ESPACE

(43) Veröffentlichungstag der Anmeldung: 06.05.2020
(73) Patentinhaber: Airbus Defence and Space GmbH, 82024 Taufkirchen (DE)
(72) Erfinder: Mädiger, Bernd, 28199 Bremen (DE); Dörmer, Manfred, 28199 Bremen (DE); Golbeck, Ortwin, 28199 Bremen (DE)
(74) Vertreter: Marschall, Stefan

(56) Entgegenhaltungen:
- WO-A1-2016/030890
- CN-A- 103 331 759
- CN-A- 106 275 519
- JP-A- H0 288 400
- US-A- 4 219 171
- US-B1- 6 354 540

## Beschreibung

Die vorliegende Erfindung betrifft eine Einfangvorrichtung, ein Raumfahrzeug und ein Einfangverfahren jeweils zum (insbesondere robotischen) Einfangen von unkooperativen Satelliten im Weltraum.

Ein Einfangen von unkooperativen, also nicht mittels einer Fernsteuerung gezielt zu bewegenden Satelliten im Weltraum bedeutet ein Ergreifen und Festhalten des jeweiligen Satelliten durch eine entsprechende Einrichtung eines Raumflugkörpers (der selbst ein Satellit sein kann). Der einzufangende Satellit (der auch als "Zielsatellit" bezeichnet wird) wird also an den Raumflugkörper angekoppelt. Dieser ist damit dann beispielsweise in der Lage, Reparaturen und/oder Wartungsoperationen wie insbesondere ein Nachtanken und/oder einen Nutzlastaustausch durchzuführen oder auch den eingefangenen Satelliten geeignet abzutransportieren, beispielsweise in einen jeweils vorteilhafteren Orbit.

Viele Satelliten weisen keine explizit für ein derartiges Ankoppeln vorgesehene Schnittstelle auf. Stattdessen können herkömmlicherweise bestimmte Halteelemente in die Düse eines Apogäumsmotors eingeführt werden, oder der Nutzlastadapter-Ring (auch "Launch-Adapter-Ring" genannt) des Satelliten kann mittels zangenartiger Greifer erfasst werden, die von Roboterarmen geführt werden: Ein Nutzlastadapter stellt die stabile mechanische Verbindung zwischen Rakete und Satellit beim Start her. In der Regel besteht er aus zwei Komponenten, eine an der Rakete und eine am Satellit, die beim Start miteinander verbunden sind. Nach dem Start wird diese Verbindung gelöst, und damit trennt sich der Satellit von der Rakete. Die satellitenseitige Komponente des Nutzlastadapters ist der Nutzlastadapter-Ring. Techniken zum Erfassen des Nutzlastadapter-Rings mittels Greifern sind in den unter http://www.satelliteevolutiongroup.com/articles/orbitalatk.pdf bzw. http://hq.wvrtc.com/ICRA2015/posters/ratti.pdf abrufbaren Dokumenten beschrieben.

Dabei sind jeweils eine hochgenaue Positionierung des jeweiligen Werkzeugs und ein entsprechend aufwendig gesteuerter Bewegungsmechanismus erforderlich, insbesondere weil der Kontakt des Werkzeugs mit dem Satelliten in der Schwerelosigkeit große Auswirkungen auf die Position und Ausrichtung des Satelliten haben kann und weil die jeweiligen Elemente mindestens teilweise in einen Innenbereich des Satelliten, beispielsweise in ein radial Inneres des Nutzlastadapter-Rings eingreifen, was eine Beschädigung des empfindlichen Materials und insbesondere eine Beeinträchtigung der ordnungsgemäßen Funktion des Zielsatelliten zur Folge haben kann.

Die Druckschrift WO 2016/030890 A1 offenbart ein Ankopplungssystem und -verfahren für Satelliten. Aus der US 4 219 171 A ist eine Vorrichtung zum Ankoppeln eines ersten an ein zweites Raumfahrzeug bekannt. Die CN 103 331 759 A offenbart einen Einfangmechanismus, und in der US 6 354 540 B1 wird ein Ankopplungssystem mit zwei androgynen Andockvorrichtungen mit Lasterfassungsring offenbart.

Der vorliegenden Erfindung liegt die Aufgabe zugrunde, eine Technik bereitzustellen, mit der ein Einfangen von unkooperativen Satelliten vereinfacht werden kann.

Die Aufgabe wird gelöst durch eine Einfangvorrichtung gemäß Anspruch 1, einen Raumflugkörper nach Anspruch 7 und ein Einfangverfahren gemäß Anspruch 11. Vorteilhafte Ausführungsformen sind in den Unteransprüchen, der Beschreibung und den Figuren offenbart.

Eine erfindungsgemäße Einfangvorrichtung dient dazu, wenn sie an einem Raumflugkörper befestigt ist, (ggf. zusammen mit mindestens einer weiteren erfindungsgemäßen Einfangvorrichtung), Satelliten im Weltraum (robotisch) einzufangen, also zu ergreifen und zu halten.

Die Einfangvorrichtung umfasst zwei Beine, die jeweils ein erstes und ein zweites Ende aufweisen; die jeweiligen ersten Enden sind durch einen Verbindungsbügel miteinander verbunden. Am Verbindungsbügel ist eine Greifeinrichtung zum Ergreifen eines jeweils einzufangenden Satelliten (beispielsweise an einem daran angeordneten Element wie insbesondere einem Nutzlastadapter-Ring) angeordnet. Am jeweiligen zweiten Ende jedes der Beine ist ein (gemeinsamer oder jeweiliger) Befestigungsfuß angeordnet, mittels dessen das jeweilige Bein an einem einfangenden Raumflugkörper befestigt sein oder werden kann. Die Verbindungen der ersten Enden mit dem Verbindungsbügel und der zweiten Enden mit dem Befestigungsfuß bzw. den jeweiligen Befestigungsfüßen sind dabei um jeweilige Achsen verschwenkbar ausgebildet, die (paarweise) parallel zueinander verlaufen (d.h. je zwei der Achsen sind parallel zueinander). Insbesondere bilden die genannten verschwenkbaren Verbindungen also Gelenke aus; vorzugsweise hat mindestens eines oder jedes der Gelenke dabei genau einen Freiheitsgrad. Insbesondere kann mindestens eines oder jedes der Gelenke vorzugsweise als Scharnier ausgebildet sein. Die Beine weisen dieselbe Beinlänge auf. Eine Verbindung eines der Beine mit dem (gemeinsamen oder jeweiligen) Befestigungsfuß ist als Gelenk ausgebildet, das einen Motor zum Verschwenken umfasst.

In einem an einem Raumflugkörper befestigten Zustand bildet also die Einfangvorrichtung mindestens einen Teil eines Rahmens aus, der aufgrund der Verschwenkbarkeit um zueinander parallele Achsen veränderlich ist; im Falle mehrerer Befestigungsfüße kann ein solcher Rahmen zudem einen Abschnitt der Oberfläche des Raumflugkörpers umfassen. Insbesondere kann mit der Rahmenanordnung auf einfache Weise eine sensible Positionierung der am Verbindungsbügel angeordneten Greifeinrichtung bewirkt werden, durch die eine nachteilige Änderung der Position und Lage des jeweils einzufangenden Satelliten minimiert werden kann. Die Rahmenanordnung bewirkt zudem, dass die jeweiligen Winkel sich gegenseitig beeinflussen. Dadurch kann die Greifeinrichtung mit besonders geringem Antriebs- und Steueraufwand in eine gewünschte Position gebracht werden. Insbesondere weist die Einfangvorrichtung (insbesondere im befestigten Zustand) vorzugsweise genau zwei Freiheitsgrade auf, so dass die Greifeinrichtung genau in einem Bereich bewegt werden kann, der in einer Ebene liegt.

Ein erfindungsgemäßer Raumflugkörper umfasst mindestens eine erfindungsgemäße Einfangvorrichtung gemäß einer der in dieser Schrift offenbarten Ausführungsformen, die mit ihrem Befestigungsfuß bzw. ihren Befestigungsfüßen an einer weiteren Komponente wie beispielsweise einer Grundplatte des Raumflugkörpers befestigt ist. Vorzugsweise erstrecken sich die Beine dabei parallel zueinander.

Gemäß einer bevorzugten Ausführungsform umfasst ein erfindungsgemäßer Raumflugkörper zwei, drei oder mehr erfindungsgemäße Einfangvorrichtungen, die zueinander drehsymmetrisch um eine Achse angeordnet sind; die Achse kann dabei vorzugsweise senkrecht zu einer Oberfläche stehen, an der die Einfangvorrichtungen angeordnet sind. Die Greifeinrichtung mindestens einer der Einfangvorrichtungen ist bei derartigen Ausführungsformen vorzugsweise radial zur genannten Achse (also entlang einer die Achse enthaltenden Ebene wahlweise zur Achse hin oder von der Achse weg) verschwenkbar, insbesondere durch Verschwenken der Beine der jeweiligen Einfangvorrichtung relativ zu ihrem jeweiligen Befestigungsfuß. Auf diese Weise kann die Einfangvorrichtung am Raumflugkörper an verschiedene Elemente von jeweils einzufangenden Satelliten, an denen die jeweiligen Satelliten ergriffen werden können, angepasst werden, beispielsweise an verschiedene Durchmesser jeweiliger Nutzlastadapter-Ringe.

Gemäß vorteilhaften Ausführungsform der vorliegenden Erfindung ist der Raumflugkörper selbst ein Satellit. Ein einzufangender Satellit kann jeweils insbesondere unkooperativ sein; vorzugsweise ist er jeweils lagegeregelt, also bezüglich seiner Ausrichtung stabilisiert.

Die beiden Beine einer erfindungsgemäßen Einfangvorrichtung haben dieselbe Beinlänge; als derartige Beinlänge wird dabei in dieser Schrift ein jeweiliger Abstand einer Verschwenkungsachse am ersten Ende zu einer Verschwenkungsachse am zweiten Ende des jeweiligen Beins verstanden. In Ausführungsformen, bei denen die zweiten Enden der Beine mit einem gemeinsamen Befestigungsfuß verbunden sind, haben die Verschwenkungsachsen an den zweiten Enden der Beine voneinander vorzugsweise zusätzlich denselben Abstand wie die Verschwenkungsachsen an den ersten Enden voneinander; in Ausführungsformen, bei denen die zweiten Enden mit verschiedenen Befestigungsfüßen verbunden sind, können diese vorzugsweise entsprechend an einem Raumflugkörper befestigt werden (so dass also der Abstand der zweiten Enden voneinander gleich dem der ersten Enden voneinander ist). Bei derartigen Ausführungsformen bilden dann die vier zugehörigen Gelenke zusammen die Ecken eines Parallelogramms aus. Die an einem erfindungsgemäßen Raumflugkörper befestigte mindestens eine Einfangvorrichtung ist bei derartigen Ausführungsformen dann vorzugsweise in einem solchen Zustand, der im weiteren als "Parallelogrammzustand" der jeweiligen Einfangvorrichtung bezeichnet wird, befestigt.

Eine Verschwenkung der Beine in Bezug auf den Fuß bzw. die Füße (bzw. eine Verschwenkung der Einfangvorrichtung insgesamt in Bezug auf den Raumflugkörper, insbesondere auf eine Oberfläche desselben) ändert bei solchen Ausführungsformen lediglich die Ausprägung des jeweiligen Parallelogramms, nicht aber die grundsätzliche Tatsache, dass die vier Gelenke die Ecken eines Parallelogramms bilden. Eine (abstrakte, gerade) Verbindung der Gelenke an den ersten beiden Enden der Beine miteinander bleibt also parallel zu einer (abstrakten, geraden) Verbindung der Gelenke an den zweiten beiden Enden der Beine. Damit ergibt sich, dass auch eine Ausrichtung (d.h. jeweilige Winkel) des Verbindungsbügels zu einer Oberfläche des Raumflugkörpers bei einer Verschwenkung konstant bleibt (bleiben), was damit also auch für die Greifeinrichtung, insbesondere für eine ggf. vorhandene Anliegefläche und/oder einen Klemmfinger der Greifeinrichtung gilt, die weiter unten beschrieben sind.

Insbesondere muss dann die Greifeinrichtung bei einer Verschwenkung der Beine nicht an geänderte Winkel angepasst werden, sondern sie behält ihre Ausrichtung zum einzufangenden Satelliten (bzw. zu einem Element des Satelliten, beispielsweise dessen Nutzlastadapter-Ring) bei. Dies erleichtert zum einen die Steuerung der Einfangvorrichtung, zum anderen ermöglicht es ein planvolles, behutsames Annähern der Greifeinrichtung an den Satelliten (z.B. dessen Nutzlastadapter-Ring).

Die Beine einer erfindungsgemäßen Einfangvorrichtung können beispielsweise jeweils eine Beinlänge aufweisen, die im Bereich 35cm bis 65cm, insbesondere 40cm bis 60cm liegt. Ein Abstand der Verschwenkungsachsen an den ersten Enden voneinander kann bei einer erfindungsgemäßen Einfangvorrichtung beispielsweise in einem Bereich von 20cm bis 50cm, insbesondere 30cm bis 45cm liegen.

Gemäß vorteilhaften Ausführungsformen der vorliegenden Erfindung mit mehreren Befestigungsfüßen weisen diese dieselbe Fußhöhe auf; als solche wird in dieser Schrift ein Abstand zwischen einer Kontaktoberfläche des jeweiligen Befestigungsfußes, die bei einer Befestigung an einem Raumflugkörpers an einer Oberfläche desselben anliegt, und der jeweiligen Verschwenkungsachse, um die der jeweilige Befestigungsfuß relativ zum verbundenen Bein verschwenkbar ist, bezeichnet. Derartige Ausführungsvarianten sind insbesondere für eine Befestigung an einer ebenen Oberfläche des Raumflugkörpers geeignet.

Die Greifeinrichtung einer erfindungsgemäßen Einfangvorrichtung kann vorzugsweise eine Anliegefläche aufweisen, die dazu eingerichtet ist, beim Einfangen (vorzugsweise mit flächigem Kontakt) an eine dem einfangenden Raumflugkörper zugewandten Oberfläche eines jeweils einzufangenden Satelliten angelegt zu werden. Eine derartige Anliegefläche ist vorzugsweise eben.

Insbesondere bevorzugt sind Ausführungsformen, bei denen die Beine dieselbe Beinlänge haben und eine solche Anliegefläche aufweisen. Vorzugsweise verläuft die Anliegefläche dann in einer Ebene parallel zu der Ebene verläuft, die durch die Verschwenkungsachsen an den ersten Enden der Beine (zum Verbindungsbügel) gegeben ist. In einem Parallelogrammzustand der Einfangvorrichtung wie oben erwähnt wird dann die Anliegefläche bei einer Verschwenkung nicht gekippt, sondern behält ihren Winkel zu einer zugewandten Oberfläche des Satelliten bei. So kann das Erfordernis von Ausgleichsbewegungen vermieden werden, auf dafür erforderliche Bewegungsmechanismen verzichtet sowie die Steuerung vereinfacht werden.

Gemäß einer vorteilhaften Ausführungsform umfasst die Greifeinrichtung einen Klemmfinger, der dazu eingerichtet ist, ein am jeweils einzufangenden Satelliten angeordnetes Element (beispielsweise einen radial äußeren Vorsprung an einem Nutzlastadapter-Ring des Satelliten) zum umgreifen oder in eine Nut an dem Element (beispielsweise dem Nutzlastadapter-Ring des Satelliten) einzugreifen.

Insbesondere kann ein solcher Klemmfinger relativ zu einer ggf. zusätzlich vorhandenen Anliegefläche beweglich sein. Auf diese Weise kann der Klemmfinger dann dazu eingerichtet sein, das Element gegen die Auflagefläche zu pressen und es so an der Greifeinrichtung zu fixieren. Der Klemmfinger weist bei derartigen Ausführungsformen vorzugsweise eine der Anliegefläche zugewandte Klemmfläche auf, deren Abstand zur Anliegefläche veränderlich ist; ein maximaler Abstand kann dabei beispielsweise höchstens 16cm oder höchstens 14cm betragen. Zum Bewegen des Klemmfingers relativ zur Anliegefläche weist eine erfindungsgemäße Einfangvorrichtung einer derartigen Ausführungsform vorzugsweise einen Elektromotor auf.

In einer vorteilhaften Ausführungsform eines erfindungsgemäßen Raumflugkörpers, die (wie oben erwähnt) mehrere drehsymmetrisch um eine Achse angeordnete erfindungsgemäße Einfangvorrichtungen umfasst, weist mindestens eine der Einfangvorrichtungen vorzugsweise einen Klemmfinger wie oben beschrieben auf. Bevorzugtermaßen ist dabei der Klemmfinger der Achse zugewandt, weist also zur Achse hin. Insbesondere können alle am Raumflugkörper befestigten Einfangvorrichtungen derart ausgebildet sein.

Damit kann beispielsweise ein Nutzlastadapter-Ring des Satelliten von radial außen ergriffen werden. So kann jeweils vermieden werden, dass innere Strukturen wie beispielsweise eine mehrschichtiges Isolationsmaterial (Multilayer-Insulation-Material, MLI) durch das Einfangen beschädigt wird.

Die Konstruktion ermöglicht dabei insbesondere, dass der Satellit (z.B. an seinem Nutzlastadapter-Ring) zunächst durch die jeweiligen Klemmfinger gemeinsam vorfixiert und erst danach zwischen den jeweiligen Fingern und den jeweiligen Anliegeflächen eingeklemmt wird. Ein derartiges sogenanntes "capture before contact" bedeutet ein besonders behutsames und zugleich sicheres Zugreifen, mit dem eine Beschädigung des Satelliten, eine Störung seiner Funktionalität und/oder eine Änderung seiner Lage relativ zum Orbit vermieden werden können/kann.

Vorzugsweise umfasst eine erfindungsgemäße Einfangvorrichtung mindestens eine Steuerungseinrichtung, mit der eine jeweilige Verschwenkung der Beine relativ zu den jeweiligen Befestigungsfüßen und/oder eine jeweilige Greifaktion der Greifeinrichtung automatisiert eingestellt werden können/kann. Die Beine und der Verbindungsbügel zusammen bilden mit der Steuereinrichtung dann also einen Roboterarm aus, der dazu eingerichtet ist, die Greifeinrichtung automatisiert zu führen und/oder zu betätigen.

Eine erfindungsgemäße Einfangvorrichtung kann mindestens eine Sensoreinrichtung umfassen, die dazu eingerichtet ist, einen jeweiligen Abstand der Greifeinrichtung vom jeweils einzufangenden Satelliten zu erfassen. Eine derartige Sensoreinrichtung kann eine Laservorrichtung und/oder eine Kamera umfassen. Insbesondere kann die mindestens eine Sensoreinrichtung dazu eingerichtet sein, in entsprechenden Ausführungsformen mit Anliegefläche und Klemmfinger zu erfassen, ob ein am Satelliten angeordnetes Element in einer vorbestimmten Weise sowohl von einer Anliegefläche als auch vom Klemmfinger berührt wird.

In Ausführungsformen mit sowohl mindestens einer Sensoreinrichtung als auch mindestens einer Steuerungseinrichtung wie oben erwähnt kann letztere vorzugsweise dazu eingerichtet sein, eine Verschwenkung der Beine relativ zum Befestigungsfuß bzw. zu den jeweiligen Befestigungsfüßen und/oder einen Greifzustand der Greifeinrichtung auf Grundlage von durch die Sensoreinrichtung erfassten Sensordaten zu regeln.

Bei einer erfindungsgemäßen Einfangvorrichtung ist eine Verbindung eines der Beine mit dem (gemeinsamen oder jeweiligen) Befestigungsfuß als Gelenk ausgebildet, das einen Motor zum Verschwenken von Bein und Befestigungsfuß in Bezug auf einander umfasst. Zusätzlich kann eine Verbindung eines (anderen) der Beine mit dem (gemeinsamen oder jeweiligen) Befestigungsfuß als rein passives Gelenk ausgebildet sein, also keinen eigenen Verschwenkungsantrieb aufweisen. Ein derartiges passives Gelenk gibt also im befestigten Zustand beispielsweise aufgrund einer Verschwenkung des anderen Beines nach. Schließlich kann eine jeweilige Verbindung eines oder beider Beine mit dem Verbindungsbügel jeweils als rein passives Gelenk ausgebildet sein.

Insbesondere kann somit eine Verschwenkung einer erfindungsgemäßen Einfangvorrichtung bzw. ein Heranführen der Greifeinrichtung an einen einzufangenden Satelliten bzw. an ein Element desselben (z.B. an einen Nutzlastadapter-Ring des Satelliten) erfolgen, indem lediglich ein entsprechender Motor betrieben und gesteuert wird, wohingegen die anderen verschwenkbaren Verbindungen die entsprechende Verschwenkung übernehmen. Dies bedeutet einen geringen Steuerungsaufwand und - aufgrund der Vermeidung weiterer Motoren - eine geringe Masse der Einfangvorrichtung.

Gemäß vorteilhaften Ausführungsformen ist eine erfindungsgemäße Einfangvorrichtung dazu eingerichtet, in einem an der Oberfläche des einfangenden Raumflugkörpers befestigten Zustand wahlweise an die Oberfläche angelegt zu werden (beispielweise so, dass die Beine parallel zur Oberfläche verlaufen) oder von der Oberfläche abstehend aufgestellt zu werden. Die Beine können also jeweils entsprechend weit verschwenkt werden. Dies ermöglicht einen vorteilhaften Transport bzw. eine vorteilhafte Start- bzw. Flugphase des Raumflugkörpers mit angeklappter Einfangvorrichtung einerseits und eine geeignete Verwendung in aufgestelltem Zustand der Einfangvorrichtung andererseits.

Ein erfindungsgemäßes Einfangverfahren dient dem Einfangen eines Satelliten im Weltraum mittels eines erfindungsgemäßen Raumflugkörpers gemäß einer der in dieser Schrift offenbarten Ausführungsformen. Das Einfangverfahren umfasst ein Annähern des Raumflugkörpers an den einzufangenden Satelliten und ein Verschwenken der Beine der mindestens einen Einfangvorrichtung bzw. mindestens einer der Einfangvorrichtungen, die am Raumflugkörper befestigt ist/sind in eine Greifposition, in der die Greifeinrichtung und eine vorbestimmte Struktur des einzufangenden Satelliten (z.B. eines Nutzlastadapter-Rings des Satelliten) einander (in einer vorbestimmten Weise) gegenüberstehen. Die Struktur kann beispielsweise einen Rand eines Vorsprungs an oder eine Nut in einem Element des Satelliten (z.B. einem Nutzlastadapter-Ring) umfassen, der/die in der Greifposition bei einsprechenden Ausführungsformen einem Klemmfinger der Greifeinrichtung gegenüberstehen kann, so dass der Klemmfinger um den Vorsprung greifen bzw. in die Nut eingeführt werden kann. Alternativ oder zusätzlich kann die Struktur eine (vorzugsweise ebene und/oder vom Satelliten weg weisende) Oberfläche des Satelliten umfassen, beispielsweise eine ebene Grundfläche des Nutzlastadapter-Rings). In entsprechenden Ausführungsformen kann dann in der Greifposition eine Anliegefläche der Greifeinrichtung einer derartigen Oberfläche gegenüber stehen.

Schließlich umfasst das Einfangverfahren ein Greifen des Elements mit der Greifeinrichtung der mindestens einen Einfangvorrichtung. Das Greifen kann beispielsweise (in entsprechenden Ausführungsformen) ein Bewegen eines Klemmfingers zu einer Achse hin umfassen, um die herum mehrere Einfangvorrichtungen drehsymmetrisch angeordnet sein können (wodurch der Klemmfinger beispielsweise in eine Nut eingeführt und/oder um einen Vorsprung gelegt wird), und/oder ein Bewegen eines/des Klemmfingers zu einer Anliegefläche hin (wobei dann der Satellit vorzugsweise mitgezogen wird).

Das Greifen erfolgt vorzugsweise erst, wenn mindestens zwei oder drei der Einfangvorrichtungen jeweils in einer jeweiligen Greifposition sind. Auf diese Weise kann das oben erwähnte "Capture before contact" realisiert werden.

Gemäß vorteilhaften Ausführungsformen eines erfindungsgemäßen Einfangverfahrens kann mindestens eine der Einfangvorrichtungen wie oben beschrieben dazu eingerichtet sein, wahlweise an eine Oberfläche des Raumflugkörpers angeklappt oder von der Oberfläche abstehend aufgestellt zu werden. Das Einfangverfahren kann dann ein Aufstellen der Beine in eine von der Oberfläche des Raumflugkörpers abstehende Richtung und/oder ein Anklappen der Beine (ggf. derselben oder einer anderen der Einfangvorrichtungen) an die Oberfläche (beispielweise so, dass die Beine parallel zur Oberfläche verlaufen) umfassen.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:
- Figur 1:: eine exemplarische Ausführungsform einer erfindungsgemäßen Einfangvorrichtung in perspektivischer Ansicht;
- Figur 2:: die Einfangvorrichtung gemäß Figur 1 in einer anderen Perspektive und in einem anderen Zustand der Greifeinrichtung;
- Figur 3:: die Einfangvorrichtung gemäß Figur 1 in einem an eine Oberfläche eines Raumflugkörpers angeklappten Zustand;
- Figur 4:: einen Teil eines erfindungsgemäßen Raumflugkörpers; und
- Figur 5:: eine Detailansicht einer exemplarischen erfindungsgemäßen Einfangvorrichtung beim Halten eines eingefangenen Satelliten.

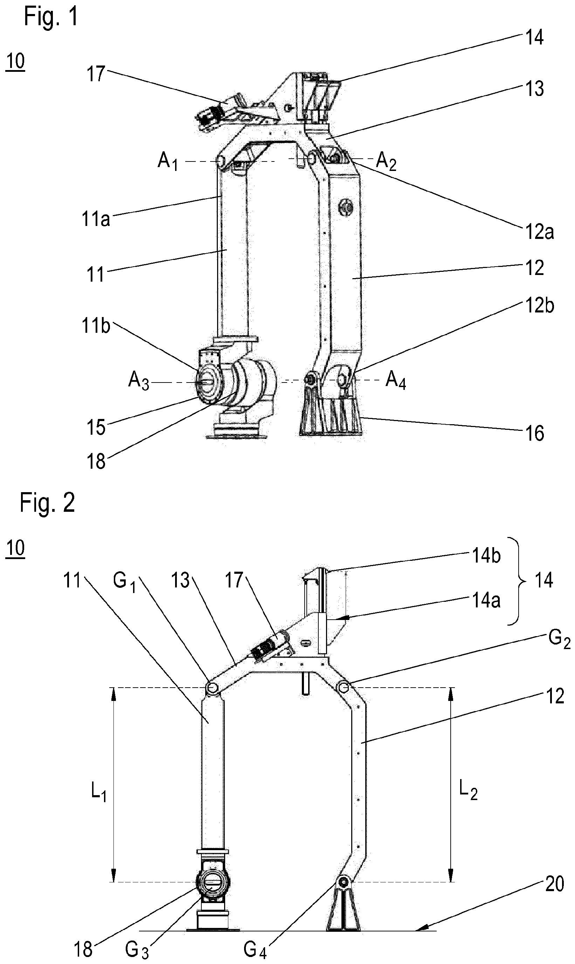

In Figur 1 ist in perspektivischer Ansicht ein Ausführungsbeispiel einer erfindungsgemäßen Einfangvorrichtung 10 zum Einfangen von Satelliten im Weltraum dargestellt. Die Einfangvorrichtung weist zwei Beine 11, 12 auf. Ein jeweiliges erstes Ende 11a, 12a der Beine ist um eine jeweilige Achse A₁, A₂ verschwenkbar mit einem Verbindungsbügel 13 verbunden, der somit die ersten Enden 11a, 12a der beiden Beine 11, 12 miteinander verbindet. Die jeweilige Verbindung der Beine mit dem Verbindungsbügel ist dabei jeweils als Scharnier (insbesondere mit genau einem Freiheitsgrad) ausgebildet.

Am Verbindungsbügel 13 ist eine Greifeinrichtung 14 zum Ergreifen eines jeweils einzufangenden Satelliten angeordnet, die mit Bezug zur Figur 2 unten näher beschrieben wird. Eine ebenfalls am Verbindungsbügel 13 angeordnete Sensoreinrichtung 17 ist dazu eingerichtet, einen von der Greifeinrichtung 14 jeweils durchgeführten Greifvorgang zu kontrollieren, was beispielsweise das Bestimmen eines jeweiligen Abstands der Greifeinrichtung 14 vom einzufangenden Satelliten umfassen kann.

Am jeweiligen zweiten Ende 11b, 12b ist im gezeigten Ausführungsbeispiel jeweils ein Befestigungsfuß 15, 16 angeordnet, mittels dessen die Einfangvorrichtung 10 an einer Oberfläche eines Raumflugkörpers befestigt ist oder werden kann (in der Figur 1 nicht dargestellt). Eine jeweilige Verbindung der zweiten Enden 11b, 12b der Beine mit dem jeweiligen Befestigungsfuß ist ebenfalls als Scharnier ausgebildet, so dass die Beine 11, 12 in Bezug auf die Befestigungsfüße jeweils um eine Achse A₃ bzw. A₄ verschwenkbar sind. In alternativen (nicht dargestellten) Ausführungsvarianten können beide zweiten Enden mit einem gemeinsamen Befestigungfuß jeweils verschwenkbar (insbesondere mittels eines jeweiligen Scharniers) verbunden sein.

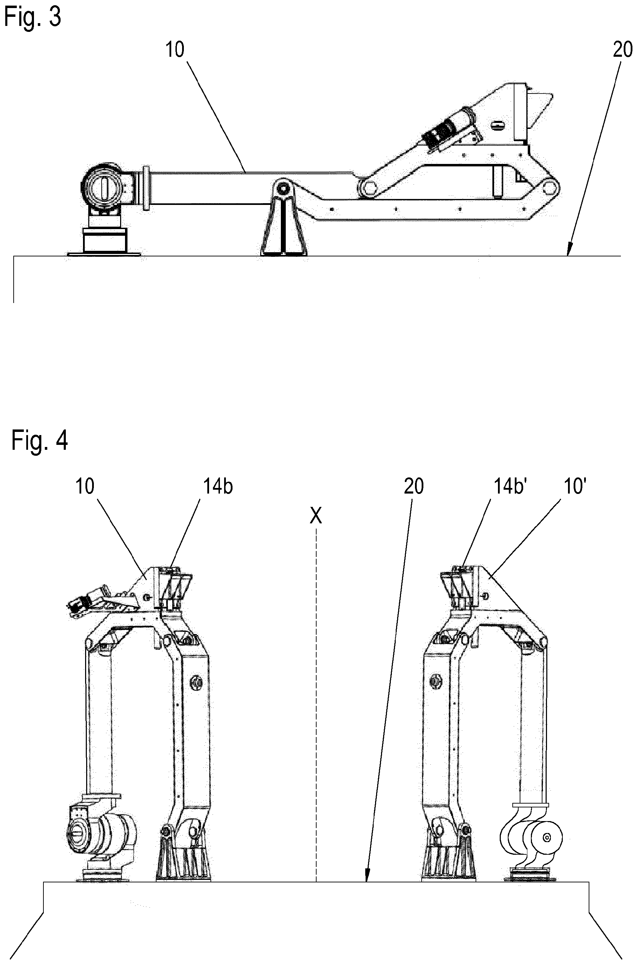

Die Achsen A₁, A₂, A₃ und A₄ sind (paarweise) parallel zueinander. Wie in den Figuren 2 und 3 (aus einer anderen Perspektive als in Figur 1) gezeigt ist, bildet die Einfangvorrichtung 10 in einem an einer Oberfläche 20 eines Raumflugkörpers befestigten Zustand zusammen mit einem Abschnitt der Oberfläche einen Rahmen aus, der aufgrund der Parallelität der Achsen A₁, A₂, A₃ und A₄ veränderlich, nämlich insgesamt verschwenkbar ist. Dadurch kann die Greifeinrichtung auf einfache Weise in eine vorteilhafte Position geführt werden.

Wie weiter in der Figur 2 dargestellt ist, weist die Greifeinrichtung 14 insbesondere eine Anliegefläche 14a und einen Klemmfinger 14b auf, dessen Abstand von der Anliegefläche 14a - wie durch einen entsprechenden Doppelpfeil gekennzeichnet - veränderlich ist. Die Anliegefläche 14a erstreckt sich im gezeigten Beispiel parallel zur Oberfläche 20, und sie ist dazu eingerichtet bzw. vorgesehen, beim Einfangen an eine dem einfangenden Raumflugkörper zugewandten Oberfläche eines jeweils einzufangenden Satelliten angelegt zu werden. Der Klemmfinger 14b ist dazu eingerichtet, um einen Vorsprung (beispielsweise eine Schulter) an einer Oberfläche des jeweils einzufangenden Satelliten herumzugreifen und/oder in eine Nut in der Oberfläche des Satelliten einzugreifen. Durch Bewegung zur Anliegefläche hin kann der Klemmfinger dann den Satelliten zur Anliegefläche hinführen und/oder ihn an die Anliegefläche pressen.

Wie in der Figur 2 gekennzeichnet, ist eine durch den Abstand der Achsen A₁ und A₃ voneinander gegebene Beinlänge L₁ eines ersten Beins 11 gleich der durch den Abstand der Achsen A₂ und A₄ voneinander gegebene Beinlänge L₂ des zweiten Beins 12. Die Einfangvorrichtung 10 konnte deshalb in einem Parallelogrammzustand, in dem die Gelenke G₁, G₂, G₃ und G₄ die Ecken eines Parallelogramms darstellen, an der Oberfläche 20 des Raumflugkörpers befestigt werden, wie dies in der Figur 2 gezeigt ist. Ebenso wie die Beinlängen L₁ und L₂ sind dabei also die Abstände G₃-G₄ und G₁-G₂ gleich. Als Folge bleibt bei einer Verschwenkung der Einfangvorrichtung 10 die (durch jeweilige Winkel) bestimmte) Ausrichtung des Verschwenkungsbügels 13 und der daran angeordneten Greifeinrichtung 14 relativ zur Oberfläche 20 konstant. Insbesondere bleibt die Parallelität der Anliegefläche 14a zur Oberfläche 20 auch bei jeder Verschwenkung der Vorrichtung 10 erhalten. Die Einfangvorrichtung ist daher besonders einfach steuerbar, weil ein Ausgleich einer Bewegung (nämlich Verschwenkung) der Einfangvorrichtung, mit der die Greifvorrichtung 14 zu einem Satelliten geführt wird, nicht erforderlich ist.

Die Gelenke G₁, G₂ und G₄ sind im dargestellten Ausführungsbeispiel als passive Scharniere ausgebildet, die eine Verschwenkung lediglich als Reaktion auf eine Verschwenkung des ebenfalls als Scharnier ausgebildeten, durch einen Motor 18 angetriebenen und damit aktiven Gelenks durchführen. Die Verwendung passiver Gelenke und damit die Vermeidung zusätzlicher Motoren bedeutet sowohl eine Masseeinsparung als auch eine Vereinfachung der Steuerung.

Die Figur 2 zeigt die Einfangvorrichtung 10 in einem aufgestellten, von der Oberfläche 20 abstehenden Zustand, in dem Greifeinrichtung 14 vorteilhaft zum Einfangen von Satelliten eingesetzt werden kann.

Demgegenüber ist die Einfangvorrichtung in der Figur 3 in einem an die Oberfläche 20 angeklappten Zustand gezeigt, in dem sie beispielsweise vorteilhaft in einem Transportvorgang, insbesondere bei einem Transport des Raumflugkörpers von der Erde in den Weltraum gehalten werden kann.

In Figur 4 ist ein Teil eines erfindungsgemäßen Raumflugkörpers 1 dargestellt, an dessen Oberfläche 20 drei erfindungsgemäße Einfangvorrichtungen befestigt sind, von denen in der Figur aus Übersichtlichkeitsgründen nur zwei, nämlich die Einfangvorrichtungen 10 und 10' sichtbar sind. Die Einfangvorrichtungen sind drehsymmetrisch mit einem Winkel von 120° um eine Achse X angeordnet, die orthogonal zur Oberfläche 20 steht (in der Figur ist die Drehsymmetrie aufgrund des Fehlens der dritten Einfangvorrichtung und der Perspektive mit Blickrichtung parallel zur Oberfläche 20 nur teilweise erkennbar). Dabei sind die Einfangvorrichtungen jeweils so an der Oberfläche 20 befestigt, dass sie radial zur Achse X (also entlang einer die Achse X enthaltenden Ebene) verschwenkbar sind. Ein Abstand der Greifeinrichtungen der Einfangvorrichtungen zur Achse X kann somit durch Verschwenkung der Einfangvorrichtung geändert werden. So kann die Anordnung insbesondere an unterschiedliche Durchmesser von Nutzlastadapter-Ringen jeweils einzufangender Satelliten angepasst werden.

Die Klemmfinger 14b, 14b' der Einfangvorrichtungen 10, 10' sind jeweils der Achse X zugewandt, weisen also zu ihr hin. Damit erlaubt die Anordnung ein Angreifen der Einfangvorrichtungen an einen einzufangenden Satelliten, insbesondere dessen Nutzlastadapter-Ring, ohne dass in das Innere des Ringes hineingegriffen werden müsste. Damit können Beschädigungen in dem empfindlichen Innenbereich vermieden werden.

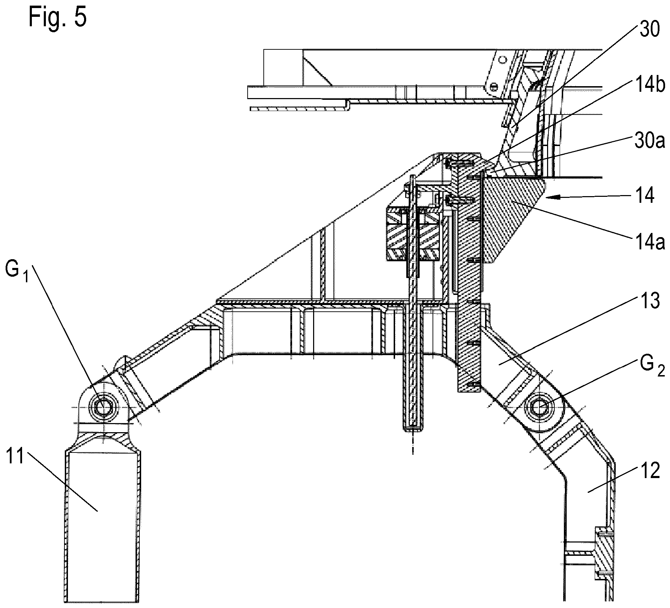

In Figur 5 ist ein Bereich einer exemplarischen Einfangvorrichtung dargestellt. Deren Greifeinrichtung 14 weist eine Anliegefläche 14a und einen Klemmfinger 14b auf, zwischen denen im dargestellten Zustand eine Schulter 30a des Nutzlastadapter-Rings 30 eines eingefangenen Satelliten eingeklemmt ist. Auf diese Weise wird der Satellit durch die Greifeinrichtung 14 festgehalten. Bezogen auf eine zentrale Achse des Nutzlastadapter-Rings 30 ist die Schulter 30a vorzugsweise radial außen angeordnet. Insbesondere greift die Greifeinrichtung 14 damit den Nutzlastadapter-Ring von radial außen an.

Offenbart ist eine Einfangvorrichtung 10, 10' zum Einfangen von Satelliten im Weltraum. Die Einfangvorrichtung umfasst zwei Beine 11, 12 jeweils mit einem ersten Ende 11a, 12a und einem zweiten Ende 11b, 12b. Ein Verbindungsbügel 13 verbindet die jeweiligen ersten Enden der beiden Beine miteinander. Am Verbindungsbügel ist eine Greifeinrichtung 14 zum Ergreifen eines jeweils einzufangenden Satelliten angeordnet. Mittels eines gemeinsamen oder jeweiligen Befestigungsfußes 15, 16 am jeweiligen zweiten Ende jedes der Beine kann das jeweilige Bein an einem einfangenden Raumflugkörper 1 befestigt sein oder werden. Die Beine sind mit dem Verbindungsbügel und mit dem Befestigungsfuß bzw. den Befestigungsfüßen jeweils verschwenkbar verbunden, wobei die jeweiligen (Verschwenkungs-) Achsen A₁, A₂, A₃, A₄ alle parallel zueinander sind.

Offenbart sind ferner ein Raumflugkörper 1 mit mindestens einer, vorzugsweise drei Einfangvorrichtung/en 10, 10' sowie ein Einfangverfahren zum Einfangen eines Satelliten im Weltraum.

### Bezugszeichen

- 1: Raumflugkörper

- 10, 10': Einfangvorrichtung
- 11, 12: Bein
- 11a, 12a: erstes Ende eines Beins
- 11b, 12b: zweites Ende eines Beins
- 13: Verbindungsbügel
- 14: Greifeinrichtung
- 14a: Anliegefläche
- 14b, 14b': Klemmfinger
- 15, 16: Befestigungsfuß
- 17: Sensoreinrichtung
- 18: Motor

- 20: Oberfläche des Raumflugkörpers 1

- 30: Nutzlastadapter-Ring
- 30a: Schulter am Nutzlastadapter-Ring

- A₁, A₂, A₃, A₄: (Verschwenkungs-) Achsen
- L₁, L₂: Beinlängen
- X: zur Oberfläche 20 orthogonale Achse, um die herum Einfangvorrichtungen angeordnet sind

## Patentansprüche

1. Einfangvorrichtung (10) zum Einfangen von Satelliten im Weltraum, wobei die Einfangvorrichtung umfasst:
- zwei Beine (11, 12) jeweils mit einem ersten Ende (11a, 12a) und einem zweiten Ende (11b, 12b);
- einen Verbindungsbügel (13), der die jeweiligen ersten Enden der beiden Beine miteinander verbindet;
- eine am Verbindungsbügel angeordnete Greifeinrichtung (14) zum Ergreifen eines jeweils einzufangenden Satelliten; und
- am jeweiligen zweiten Ende jedes der Beine einen gemeinsamen oder je einen Befestigungsfuß (15, 16), mittels dessen das jeweilige Bein an einem einfangenden Raumflugkörper (1) befestigt sein oder werden kann;
wobei die Beine mit dem Verbindungsbügel und mit dem gemeinsamen bzw. jeweiligen Befestigungsfuß jeweils um zueinander parallele Achsen (A₁, A₂, A₃, A₄) verschwenkbar verbunden sind und dieselbe Beinlänge (L₁, L₂) aufweisen,
**dadurch gekennzeichnet, dass**
eine Verbindung eines der Beine (11) mit dem jeweiligen Befestigungsfuß (15) als Gelenk (G₃) ausgebildet ist, das einen Motor (18) zum Verschwenken umfasst.

2. Einfangvorrichtung gemäß Anspruch 1, wobei die zweiten Enden der Beine
- mit demselben Befestigungsfuß verbunden sind, und zwar in demselben Abstand voneinander, den auch die ersten beiden Enden voneinander haben; oder
- mit einem jeweiligen Befestigungsfuß verbunden sind, wobei die jeweiligen Befestigungsfüße dazu eingerichtet sind, so an dem Raumflugkörper befestigt zu werden, dass die beiden zweiten Enden der Beine denselben Abstand voneinander haben wie die beiden ersten Enden.

3. Einfangvorrichtung gemäß einem der Ansprüche 1 oder 2, wobei die Greifeinrichtung (14) eine Anliegefläche (14a) umfasst, die dazu eingerichtet ist, beim Einfangen an einer dem einfangenden Raumflugkörper zugewandten Oberfläche eines jeweils einzufangenden Satelliten angelegt zu werden.

4. Einfangvorrichtung gemäß einem der vorhergehenden Ansprüche, wobei die Greifeinrichtung (14) einen Klemmfinger (14b) aufweist, der dazu eingerichtet ist, ein am jeweils einzufangenden Satelliten angeordnetes Element zu umgreifen und/oder in eine Nut in dem Element einzugreifen.

5. Einfangvorrichtung gemäß einem der vorhergehenden Ansprüche, die zudem mindestens eine Sensoreinrichtung (17) umfasst, die dazu eingerichtet ist, einen von der Greifeinrichtung (14) durchgeführten Greifvorgang zu kontrollieren.

6. Einfangvorrichtung gemäß einem der vorhergehenden Ansprüche, wobei
- eine Verbindung (19) eines der Beine (12) mit dem jeweiligen Befestigungsfuß (16) als rein passives Gelenk (G₄) ausgebildet ist; und/oder
- eine jeweilige Verbindung eines oder beider Beine (11, 12) mit dem Verbindungsbügel (13) jeweils als rein passives Gelenk (G₁, G₂) ausgebildet ist.

7. Raumflugkörper (1), an dem mindestens eine Einfangvorrichtung gemäß einem der vorhergehenden Ansprüche mit ihren Befestigungsfüßen (15, 16) befestigt ist.

8. Raumflugkörper (1) gemäß Anspruch 7, wobei die ersten Enden der Beine durch ein jeweiliges erstes Gelenk (G₁, G₂) mit dem Verbindungsbügel verbunden sind und die zweiten Enden der Beine jeweils durch ein jeweiliges zweites Gelenk (G₃, G₄) mit dem gemeinsamen bzw. mit je einem Befestigungsfuß, und wobei die ersten und zweiten Gelenke (G₁, G₂, G₃, G₄) zusammen in jedem Verschwenkungszustand ein Parallelogramm ausbilden.

9. Raumflugkörper nach einem der Ansprüche 7 oder 8, der zwei, drei oder mehr Einfangvorrichtungen (10, 10') jeweils gemäß einem der Ansprüche 1 bis 6 umfasst, die zueinander drehsymmetrisch um eine Achse (X) angeordnet sind.

10. Raumflugkörper gemäß Anspruch 9, bei dem mindestens eine der Einfangvorrichtungen radial zur Achse (X) verschwenkbar ist; und/oder bei dem mindestens eine der Einfangvorrichtungen gemäß Anspruch 4 mit einem Klemmfinger (14b, 14b') ausgebildet ist, der der Achse (X) zugewandt ist.

11. Einfangverfahren zum Einfangen eines Satelliten im Weltraum mittels eines Raumflugkörpers (1) gemäß einem der Ansprüche 7 bis 10, wobei das Einfangverfahren umfasst:
- Annähern des Raumflugkörpers an den Satelliten,
- Verschwenken der Beine (11, 12) mindestens einer Einfangvorrichtung (10, 10') des Raumflugkörpers (1) in eine Greifposition, in der die Greifeinrichtung (14) der mindestens einen Einfangvorrichtung und eine vorbestimmte Struktur des Satelliten einander gegenüberstehen, und
- Greifen des Elements mit der Greifeinrichtung (14).

12. Einfangverfahren gemäß Anspruch 11, wobei der Raumflugkörper gemäß Anspruch 9 ausgebildet ist und wobei das Verschwenken der Beine radial zur Achse (X) erfolgt und/oder wobei das Greifen ein Bewegen eines Klemmfingers (14b) der Greifeinrichtung (14) zu einer Anlagefläche (14a) der Greifeinrichtung (14) hin umfasst.

13. Einfangverfahren gemäß einem der Ansprüche 11 oder 12, wobei das Greifen erst erfolgt, wenn mindestens zwei oder drei Einfangvorrichtungen (10, 10') des Raumflugkörpers jeweils in einer Greifposition sind.

14. Einfangverfahren gemäß einem der Ansprüche 11 bis 13, wobei das Einfangverfahren ein Aufstellen der Beine (15, 16) mindestens einer der Einfangvorrichtungen in eine von einer Oberfläche (20) des Raumflugkörpers abstehende Richtung und/oder ein Anklappen der Beine mindestens einer der Einfangvorrichtungen an die Oberfläche (20) umfasst.

## Claims

1. A capture device (10) for capturing satellites in outer space, wherein the capture device comprises:
- two legs (11, 12), each with a first end (11a, 12a) and a second end (11b, 12b);
- a connecting bracket (13) that connects the respective first ends of the two legs;
- a gripping device (14) arranged on the connecting bracket for gripping a respective satellite to be captured; and
- a shared or respective attachment foot (15, 16) at the respective second end of each of the legs, by means of which the respective leg can be or become fastened to a capturing spacecraft (1);
wherein the legs are connected with the connecting bracket and with the shared or respective attachment foot so that they can each swivel around mutually parallel axes (A₁, A₂, A₃, A₄), and have the same leg length (L₁, L₂),
**characterized in that** a connection between one of the legs (11) and the respective attachment foot (15) is designed as a hinge (G₃), which comprises a motor (18) for swiveling purposes.

2. The capture device according to claim 1, wherein the second ends of the legs
- are connected with the same attachment foot, specifically with the distance between them being the same as the distance between the first two ends; or
- are connected with a respective attachment foot, wherein the respective attachment feet are set up to be attached to the spacecraft in such a way that the distance between the two second ends of the legs is the same as the distance between the two first ends.

3. The capture device according to one of claims 1 or 2, wherein the gripping device (14) comprises an abutment surface (14a), which in the capturing process is set up to be placed against a surface of a respective satellite to be captured that faces the capturing spacecraft.

4. The capture device according to one of the preceding claims, wherein the gripping device (14) has a clamping finger (14b), which is set up to clasp an element arranged on the respective satellite to be captured and/or to engage into a groove in the element.

5. The capture device according to one of the preceding claims, which additionally comprises at least one sensor device (17), which is set up to monitor a gripping process performed by the gripping device (14).

6. The capture device according to one of the preceding claims, wherein
- a connection (19) between one of the legs (12) and the respective fastening foot (16) is designed as a purely passive hinge (G₄); and/or
- a respective connection between one or both legs (11, 12) and the connecting bracket (13) designed as a respective purely passive hinge (G₁, G₂).

7. A spacecraft (1), to which at least one capture device according to one of the preceding claims is attached with its attachment feet (15, 16).

8. The spacecraft (1) according to claim 7, wherein the first ends of the legs are connected with the connecting bracket by a respective first hinge (G₁, G₂), and the second ends of the legs are connected with the shared or respective attachment foot by a respective second hinge (G₃, G₄), and wherein the first and second hinges (G₁, G₂, G₃, G₄) together form a parallelogram in each swiveling state.

9. The spacecraft according to one of claims 7 or 8, which comprises two, three or more capture devices (10, 10') each according to one of claims 1 to 6, which are arranged rotationally symmetrical to each other around an axis (X).

10. The spacecraft according to claim 9, in which at least one of the capture devices can be swiveled radially to the axis (X); and/or in which at least one of the capture devices according to claim 4 is designed with a clamping finger (14b, 14b') that faces the axis (X).

11. A capturing process for capturing a satellite in outer space by means of a spacecraft (1) according to one of claims 7 to 10, wherein the capturing process comprises:
- the spacecraft approaching the satellite,
- swiveling the legs (11, 12) of at least one capture device (10, 10') of the spacecraft (1) into a gripping position, in which the gripping device (14) of the at least one capture device and a predetermined structure of the satellite face each other, and
- gripping the element with the gripping device (14) .

12. The capturing process according to claim 11, wherein the spacecraft is designed according to claim 9, and wherein the legs are swiveled radially to the axis (X) and/or wherein gripping comprises moving a clamping finger (14b) of the gripping device (14) toward an abutment surface (14a) of the gripping device (14).

13. The capturing process according to one of claims 11 or 12, wherein gripping only takes place when at least two or three capture devices (10, 10') of the spacecraft are each in a gripping position.

14. The capturing process according to one of claims 11 to 13, wherein the capturing process comprises putting the legs (15, 16) of at least one of the capture devices in a direction protruding from a surface (20) of the spacecraft and/or folding the legs of at least one of the capture devices to the surface (20).

## Revendications

1. Dispositif de capture (10), destiné à capturer des satellites dans l'espace, le dispositif de capture comprenant :
- deux jambes (11, 12), dotées chacune d'une première extrémité (lla, 12a) et d'une deuxième extrémité (11b, 12b) ;
- un étrier d'assemblage (13), qui assemble l'une à l'autre les premières extrémités respectives des deux jambes ;
- un dispositif de préhension (14), placé sur l'étrier d'assemblage, destiné à saisir un satellite qu'il s'agit de capturer ; et
- sur la deuxième extrémité respective de chacune des jambes, chaque fois un, ou un pied de fixation (15, 16) commun, au moyen duquel la jambe respective peut être fixée ou on peut la fixer sur l'engin spatial (1) captureur ;
les jambes avec l'étrier d'assemblage et avec le pied de fixation commun ou respectif étant assemblées en étant susceptibles de pivoter chacune autour d'axes (A₁, A₂, A₃, A₄) parallèles les uns aux autres et présentant la même longueur (L₁, L₂) de jambe,
**caractérisé en ce qu'**un assemblage de l'une des jambes (11) avec le pied de fixation (15) respectif est conçu sous la forme d'une articulation (G₃) qui comprend un moteur (18) pour le pivotement.

2. Dispositif de capture selon la revendication 1, les deuxièmes extrémités des jambes
- étant assemblées avec le même pied de fixation, et à savoir, avec le même écart mutuel que présentent également les deux premières extrémités l'une par rapport à l'autre ; ou
- étant assemblées avec un pied de fixation respectif, les pieds de fixation respectifs étant aménagés pour être fixés sur l'engin spatial de telle sorte que les deux deuxièmes extrémités des jambes présentent le même écart mutuel que les deux premières extrémités.

3. Dispositif de capture selon l'une quelconque des revendications 1 ou 2, le dispositif de préhension (14) comprenant une face d'application (14a) qui est aménagée pour être appliquée lors de la capture sur une surface d'un satellite respectif qu'il s'agit de capturer qui est dirigée vers l'engin spatial captureur.

4. Dispositif de capture selon l'une quelconque des revendications précédentes, le dispositif de préhension (14) comportant un doigt de serrage (14b), qui est aménagé pour enserrer un élément placé sur le satellite respectif qu'il s'agit de capturer et / ou pour s'engager dans une rainure dans l'élément.

5. Dispositif de capture selon l'une quelconque des revendications précédentes, qui comprend par ailleurs au moins un système de capteur (17) qui est aménagé pour contrôler un processus de préhension réalisé par le dispositif de préhension (14).

6. Dispositif de capture selon l'une quelconque des revendications précédentes,
- un assemblage (19) de l'une des jambes (12) avec le pied de fixation (16) respectif étant conçu en tant qu'une articulation (G₄) purement passive ; et / ou
- un assemblage respectif d'une ou des deux jambes (11, 12) avec l'étrier d'assemblage (13) étant respectivement conçu en tant qu'une articulation (G₁, G₂) purement passive.

7. Engin spatial (1), sur lequel au moins un dispositif de capture selon l'une quelconque des revendications précédentes est fixé par ses pieds de fixation (15, 16).

8. Engin spatial (1) selon la revendication 7, les premières extrémités des jambes étant assemblées par une première articulation (G₁, G₂) respective avec l'étrier d'assemblage et les deuxièmes extrémités des jambes étant assemblées par une deuxième articulation (G₃, G₄) respective avec le pied de fixation commun ou avec chaque fois un pied de fixation, et les premières et deuxièmes articulations (G₁, G₂, G₃, G₄) formant conjointement, dans chaque position de pivotement un parallélogramme.

9. Engin spatial selon l'une quelconque des revendications 7 ou 8, qui comprend deux, trois ou plus de dispositifs de capture (10, 10'), chacun selon l'une quelconque des revendications 1 à 6, qui sont placés en étant mutuellement symétriques en rotation autour d'un axe (X) .

10. Engin spatial selon la revendication 9, sur lequel au moins l'un des dispositifs de capture est susceptible de pivoter en direction radiale par rapport à l'axe (X) ; et / ou sur lequel au moins l'un des dispositifs de capture selon la revendication 4 est conçu avec un doigt de serrage (14b, 14b') qui est dirigé vers l'axe (X) .

11. Procédé de capture, destiné à capturer un satellite dans l'espace au moyen d'un engin spatial (1) selon l'une quelconque des revendications 7 à 10, le procédé de capture comprenant les étapes consistant à :
- approcher l'engin spatial du satellite,
- faire pivoter les jambes (11, 12) d'au moins un dispositif de capture (10, 10') de l'engin spatial (1) dans une position de préhension dans laquelle le dispositif de préhension (14) de l'au moins un dispositif de capture et une structure prédéfinie du satellite se trouvent en vis-à-vis, et
- prendre l'élément avec le dispositif de préhension (14).

12. Procédé de capture selon la revendication 11, l'engin spatial étant conçu selon la revendication 9, et le pivotement des jambes s'effectuant en direction radiale par rapport à l'axe (X) et ou la préhension comprenant un déplacement d'un doigt de serrage (14b) du dispositif de préhension (14) vers une surface d'appui (14a) du dispositif de préhension (14).

13. Procédé de capture selon l'une quelconque des revendications 11 ou 12, la préhension ne s'effectuant que si au moins deux ou trois dispositifs de capture (10, 10') de l'engin spatial sont chacun dans une position de préhension.

14. Procédé de capture selon l'une quelconque des revendications 11 à 13, le procédé de capture comprenant un redressement des jambes (15, 16) d'au moins l'un des dispositifs de capture dans une direction débordant d'une surface (20) de l'engin spatial et / ou un rabattement des jambes d'au moins l'un des dispositifs de capture vers la surface (20).
